# DEMANDE DE BREVET EUROPEEN

(11) **EP 4 765 680 A1**
(43) Date de publication de la demande: **24.06.2026**
(21) Numéro de dépôt: 25224093.2
(22) Date de dépôt: 16.12.2025
(51) Int. Cl.: H04B 10/118

(54) **RÉPÉTEUR OPTIQUE TRANSPARENT POUR SATELLITE, ET SATELLITE DE COMMUNICATION COMPRENANT UN TEL RÉPÉTEUR**

(30) Priorité: 17.12.2024 FR 2414329
(71) Demandeur: THALES, 92190 Meudon (FR)
(72) Inventeur: FAUGERON, Mickael, 31037 TOULOUSE CEDEX 1 (FR); CHARRAT, Bernard, 31037 TOULOUSE CEDEX 1 (FR); SOTOM, Michel, Alain, Jean-Paul, 31037 TOULOUSE CEDEX 1 (FR); MAHO, Anaëlle, 31037 TOULOUSE CEDEX 1 (FR)
(74) Mandataire: Lavoix

(57) **Abrégé**

Ce répéteur optique transparent configuré pour être embarqué à bord d'un satellite, comprend :
- un ensemble de fibres optiques (FO) ;
- une première tête optique (OHU1) ;
- un premier amplificateur optique à faible bruit (LNOA) ;
- un séparateur et contrôleur de polarisation (PCS) comprenant, pour chaque canal de sortie du filtre passe-bande (BPF), un séparateur et contrôleur de polarisation de canal (C-PCS) ;
- un troisième amplificateur optique de forte puissance (HPOA), par canal de sortie du séparateur et contrôleur de polarisation (PCS) ;
- un combineur de polarisations orthogonales (PBC), configuré pour recombiner les deux canaux de sortie respectifs des deux multiplexeurs optiques (HPWDM) ; et
- une deuxième tête optique (OHU2) configurée pour transmettre en sortie les signaux optiques de sortie du combineur de polarisations orthogonales (PBC).

## Description

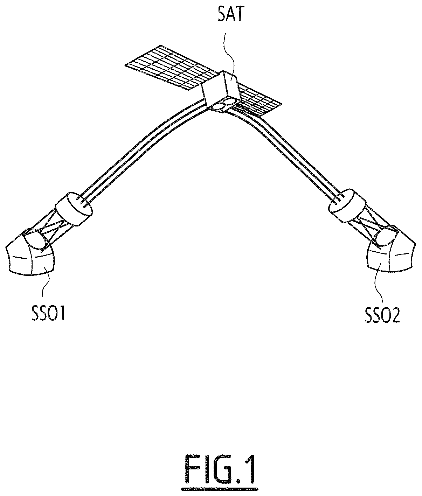

La présente invention concerne le domaine des systèmes satellitaires de télécommunications et plus particulièrement les liaisons optiques en espace libre, d'acronyme FSO pour acronyme de "Free Space Optical" en langue anglaise, pour un transfert massif de données ou "trunking" en langue anglaise entre stations au sol optiques distantes SSO1, SSO2, par l'intermédiaire d'un satellite de communication SAT, muni d'un répéteur optique, comme illustré sur la figure 1.

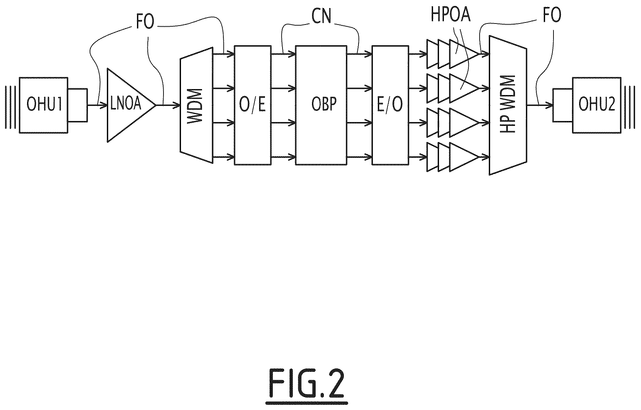

La présente invention peut également être mise en œuvre pour des stations optiques qui ne sont pas au sol, par exemple pour un lien entre une station au sol optique, un satellite avec répéteur transparent, et une "station optique" sur un autre satellite, ou pour un lien entre une "station optique" sur un satellite, un satellite avec répéteur transparent, et une "station optique" sur un autre satellite. Il est connu un répéteur optique régénératif, tel que représenté sur la figure 2, dans lequel, en plus des éléments optiques classiques d'un terminal (amplificateurs, démultiplexeurs, multiplexeurs ...), cette solution comporte des moyens de détection O/E pour "optique/électrique" et de démodulation, de traitement numérique à très haut débit et de réémission E/O pour "électrique/optique" avec des sources laser et des modulateurs.

Ces moyens de traitement numérique rapide sont réunis, sous la forme d'un processeur numérique embarqué à bord d'un satellite OBP pour "on-board processor".

Un répéteur optique régénératif présente une très forte complexité hardware à bord, avec un impact important sur les masse, consommation et volume à bord du satellite. En plus des problèmes de faisabilité et/ou de compatibilité avec l'environnement spatial des technologies numériques rapides, cela représente un surcoût important. Par ailleurs cette solution est dépendante du format de modulation (forme d'onde).

Sur l'exemple de la figure 2, le répéteur optique régénératif comprend :
- un ensemble de fibres optiques FO de transfert de signaux optiques entre les éléments optiques du répéteur, et des connexions numériques CN en entrée et en sortie du processeur numérique OBP ;
- une première tête optique OHU1 configurée pour collecter des signaux optiques, ayant deux polarisations orthogonales possibles, avec un défaut d'orthogonalité inférieur à 10°, et les focaliser ;
- un premier amplificateur optique à faible bruit LNOA configuré pour amplifier les signaux optique transmis en sortie de la première tête optique OHU1 avec un faible bruit ajouté inférieur à 6 dB ;
- un démultiplexeur optique WDM configuré pour séparer en longueur d'onde les signaux transmis en sortie de l'amplificateur optique à faible bruit LNOA, et délivrer en sortie les signaux séparés en longueur d'onde sur une pluralité de canaux de sortie correspondant chacun à une longueur d'onde ;
- un convertisseur optique/électrique O/E, pour convertir les signaux des canaux de sortie du démultiplexeur optique WDM ;
- le processeur numérique OBP qui démodule les signaux de sortie du convertisseur optique/électrique O/E, réalise des traitements numériques, puis module les signaux de sortie de l'OBP ;
- un convertisseur électrique/ optique E/O, pour convertir les signaux des canaux de sortie du processeur numérique OBP ;
- un deuxième amplificateur optique de forte puissance HPOA, par canal de sortie du convertisseur électrique/optique E/O ;
- un multiplexeur optique HPWDM pour multiplexer les signaux de sortie des deuxièmes amplificateurs optiques de forte puissance HPOA ; et
- une deuxième tête optique OHU2 configurée pour transmettre en sortie les signaux optiques de sortie du multiplexeur optique HPWDM.

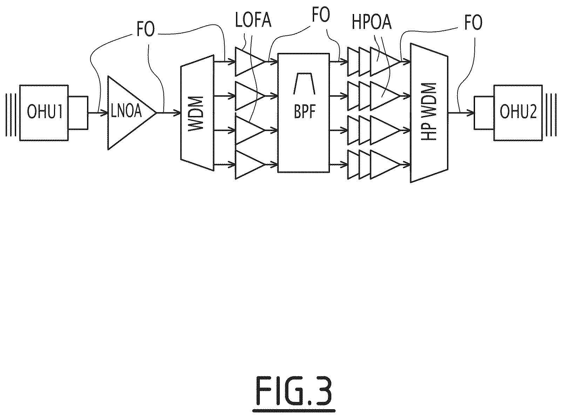

Il est également connu un répéteur optique transparent, comme illustré sur la figure 3 avec HPOA indépendants de la polarisation. Cette solution ne comporte que des moyens et éléments optiques classiques (amplificateurs, démultiplexeurs, filtres, amplificateurs de puissance multiplexeurs ...), mais pas de moyens de démodulation, ni de traitement numérique à très haut débit ou de réémission E/O avec sources laser et modulateurs. Un répéteur tout optique nécessite des puissances significativement plus élevées (typiquement +3dB) au-delà de l'état de l'art, pour que le bilan de liaison puisse être bouclé pour les débits visés, et compte tenu qu'il n'y a pas régénération de la qualité du signal à bord.

Sur l'exemple de la figure 3, le répéteur optique transparent comprend :
- un ensemble de fibres optiques FO de transfert de signaux optiques entre les éléments optiques du répéteur ;
- une première tête optique OHU1 configurée pour collecter des signaux optiques, ayant deux polarisations orthogonales possibles, avec un défaut d'orthogonalité inférieur à 10°, et les focaliser ;
- un premier amplificateur optique à faible bruit LNOA configuré pour amplifier les signaux optiques transmis en sortie de la première tête optique OHU1 avec un faible bruit ajouté inférieur à 6 dB ;
- un démultiplexeur optique WDM configuré pour séparer en longueur d'onde les signaux transmis en sortie de l'amplificateur optique à faible bruit LNOA, et délivrer en sortie les signaux séparés en longueur d'onde sur une pluralité de canaux de sortie correspondant chacun à une longueur d'onde ;
- un deuxième amplificateur optique LOFA d'une longueur d'onde, par canal de sortie du démultiplexeur optique WDM ;
- un filtre passe-bande optique BPF configuré pour filtrer le bruit des canaux de sortie des deuxièmes amplificateurs optiques LOFA ;
- un troisième amplificateur optique de forte puissance HPOA, par canal de sortie du filtre passe-bande optique BPF ;
- un multiplexeur optique HPWDM pour multiplexer les signaux des troisièmes amplificateurs optiques de forte puissance HPOA ; et
- une deuxième tête optique OHU2 configurée pour transmettre en sortie les signaux optiques de sortie du multiplexeur optique HPWDM.

Or, les puissances optiques les plus élevées sont typiquement obtenues par des amplificateurs dépendants de la polarisation, i.e. qui n'amplifient qu'un seul état de polarisation.

Afin de clore le bilan de liaison et/ou de maximiser la capacité (débit) de la liaison, il est intéressant d'utiliser des amplificateurs dépendants de la polarisation.

En effet, pour une puissance de sortie fixe donnée, on gagne environ 3 dB sur la puissance totale si on amplifie séparément chaque polarisation par un amplificateur de puissance dédié.

De plus l'utilisation d'amplificateurs dépendants de la polarisation peut être rendue nécessaire pour des raisons de performances (équilibrage du gain plus facile par exemple) et ou de disponibilité par exemple.

Il est également connu un répéteur optique transparent avec maintien de la polarisation en amont, qui consiste à maintenir l'état de polarisation à travers tout le répéteur optique embarqué à bord du satellite.

Un but de l'invention est alors de proposer un répéteur optique configuré pour être embarqué à bord d'un satellite permettant de réaliser une liaison optique en espace libre, compatible de signaux sur un ou deux états de polarisation orthogonaux, sans compromettre les budgets de masse, consommation et volume (MCV) ni les performances permettant un transfert de données massif entre deux stations au sol distantes.

A cet effet, l'invention a pour objet un répéteur optique transparent configuré pour être embarqué à bord d'un satellite, comprenant :
- un ensemble de fibres optiques de transfert de signaux optiques entre les éléments du répéteur optique ;
- une première tête optique configurée pour collecter des signaux optiques, ayant deux polarisations orthogonales possibles, avec un défaut d'orthogonalité inférieur à 10°, et les focaliser ;
- un premier amplificateur optique à faible bruit configuré pour amplifier les signaux optique transmis en sortie de la première tête optique avec un faible bruit ajouté inférieur à 6 dB ;
- un séparateur et contrôleur de polarisation, disposé en aval du premier amplificateur optique à faible bruit, comprenant, pour chaque canal d'entrée, un séparateur et contrôleur de polarisation de canal configuré pour séparer les signaux en fonction de deux polarisations orthogonales possibles, contrôler la polarisation des signaux, et délivrer en sortie les signaux séparés en polarisation sur deux sorties respectives ;
- un troisième amplificateur optique de forte puissance, par canal de sortie du séparateur et contrôleur de polarisation ;
- un combineur de polarisation, disposé en aval du séparateur et contrôleur de polarisation, configuré pour recombiner les signaux des deux canaux en entrée ; et
- une deuxième tête optique configurée pour transmettre en sortie les signaux optiques de sortie du combineur de polarisations orthogonales.

Dans un mode de réalisation, le répéteur optique transparent comprend :
- un démultiplexeur optique, disposé entre le premier amplificateur optique à faible bruit et le séparateur et contrôleur de polarisation, configuré pour séparer en longueur d'onde les signaux transmis en sortie de l'amplificateur optique à faible bruit, et délivrer en sortie les signaux séparés en longueur d'onde sur une pluralité de canaux de sortie correspondant chacun à une longueur d'onde ; et
- un multiplexeur optique, disposé entre les troisièmes amplificateurs optiques de forte puissance et le combineur de polarisations orthogonales, par ensemble de canaux de sortie de même polarisation.

Selon un mode de réalisation, le répéteur optique transparent comprend un deuxième amplificateur optique d'une longueur d'onde, par canal d'entrée du séparateur et contrôleur de polarisation.

Dans un mode de réalisation, le répéteur optique transparent comprend un filtre passe-bande optique configuré pour filtrer le bruit du ou des canaux d'entrée du séparateur et contrôleur de polarisation.

Selon un mode de réalisation, le répéteur optique transparent comprend, pour chaque canal d'entrée du séparateur et contrôleur de polarisation, un commutateur optique configuré pour pouvoir sur commande transférer les signaux optiques par une autre fibre optique à destination d'un dispositif de traitement externe de satellite, et les retransmettre après traitement par le dispositif de traitement externe de satellite à destination du séparateur et contrôleur de polarisation.

Dans un mode de réalisation, le dispositif de traitement externe de satellite comprend un processeur externe.

Selon un mode de réalisation, un séparateur et contrôleur de polarisation de canal comprend :
- un contrôleur de polarisation configuré pour modifier la polarisation des signaux optiques sur commande ;
- un séparateur de polarisation configuré pour séparer les signaux en fonction des deux polarisations orthogonales possibles sur deux canaux respectifs ; et
- un module de suivi et contrôle de polarisation par canal de sortie du séparateur et contrôleur de polarisation de canal, par boucle d'asservissement de polarisation.

Selon un mode de réalisation, un séparateur et contrôleur de polarisation de canal est configuré pour utiliser une détection de tons RF à basse fréquence, un module de suivi et contrôle de polarisation comprenant le module de suivi et contrôle de polarisation, et un module de minimisation d'une polarisation ou de maximisation de l'autre polarisation orthogonale, l'autre module de suivi et contrôle de polarisation comprenant le module de suivi et contrôle de polarisation, et un module de minimisation de l'autre polarisation ou de maximisation de la polarisation.

Dans un mode de réalisation, un séparateur et contrôleur de polarisation de canal comprend un module de suivi de polarisation configuré, lorsque les signaux reçus n'ont qu'une seule polarisation, pour utiliser une détection de puissance optique, de manière à maximiser la puissance sur le canal de sortie utile et à minimiser la puissance sur l'autre canal de sortie.

Selon un mode de réalisation, un séparateur et contrôleur de polarisation de canal comprend un module de suivi de polarisation configuré pour détecter une partie du flux optique d'un seul canal de polarisation en utilisant un récepteur cohérent, et un processeur numérique configuré pour quantifier le ratio des deux polarisations et faire une rétroaction sur le contrôleur de polarisation pour n'avoir qu'une seule polarisation dans le canal de polarisation comprenant le module de suivi.

Dans un mode de réalisation, un séparateur et contrôleur de polarisation de canal comprend un module de suivi de polarisation est configuré pour utiliser une détection d'interférence des signaux des deux canaux de polarisation.

Selon un mode de réalisation, la détection d'interférence des signaux des deux canaux de polarisation est une détection de Hansch Couillaud.

Dans un mode de réalisation, la détection d'interférence des signaux des deux canaux de polarisation est une détection hétérodyne.

Il est également proposé, selon un autre aspect de l'invention, un satellite de communication comprenant un répéteur optique transparent tel que précédemment décrit.

L'invention sera mieux comprise à l'étude de quelques modes de réalisation, décrits à titre d'exemples nullement limitatifs et illustrés sur les dessins annexés sur lesquels :
- la figure 1 illustre schématiquement un transfert massif de données entre stations au sol optiques distantes, par l'intermédiaire d'un satellite de communication, selon l'état de l'art ;
- la figure 2 illustre schématiquement un répéteur optique régénératif pour satellite de communication, selon l'état de l'art ;
- la figure 3 illustre schématiquement un répéteur optique transparent pour satellite de communication, selon l'état de l'art ;
- la figure 4a illustre schématiquement un répéteur optique transparent pour satellite de communication, selon un aspect de l'invention ;
- la figure 4b illustre schématiquement un répéteur optique transparent pour satellite de communication, selon divers aspects de l'invention ;
- la figure 5 illustre schématiquement un répéteur optique transparent pour satellite de communication de la figure 4a, capable de fonctionner en mode régénératif ;
- la figure 6 illustre schématiquement un mode de réalisation d'un séparateur et contrôleur de polarisation de canal, selon un aspect de l'invention ; et
- les figures 7, 8, 9 et 10 illustrent schématiquement des modes de réalisation d'un séparateur et contrôleur de polarisation de canal de la figure 6, selon des aspects de l'invention.

Sur l'ensemble des figures, des références identiques sont similaires.

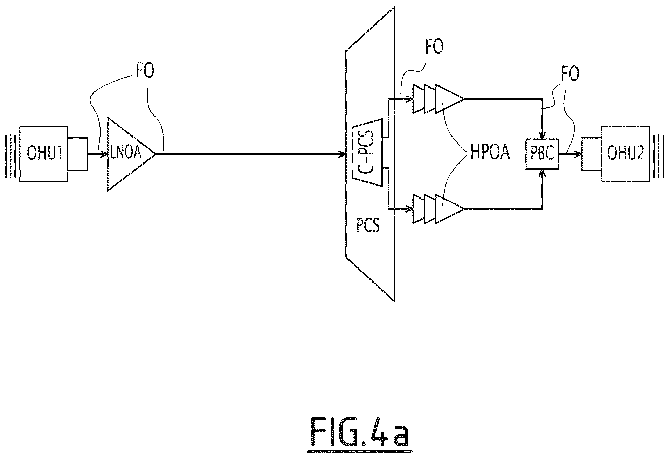

La figure 4a illustre schématiquement un répéteur optique transparent pour satellite de communication, selon un aspect de l'invention.

Le répéteur optique transparent configuré pour être embarqué à bord d'un satellite, comprend :
- un ensemble de fibres optiques FO de transfert de signaux optiques entre les éléments du répéteur optique ;
- une première tête optique OHU1 configurée pour collecter des signaux optiques, ayant deux polarisations orthogonales possibles, avec un défaut d'orthogonalité inférieur à 10°, et les focaliser ;
- un premier amplificateur optique à faible bruit LNOA configuré pour amplifier les signaux optique transmis en sortie de la première tête optique OHU1 avec un faible bruit ajouté inférieur à 6 dB ;
- un séparateur et contrôleur de polarisation PCS, disposé en aval du premier amplificateur optique à faible bruit LNOA, comprenant, pour chaque canal d'entrée, un séparateur et contrôleur de polarisation de canal C-PCS configuré pour séparer les signaux en fonction de deux polarisations orthogonales possibles, contrôler la polarisation des signaux, et délivrer en sortie les signaux séparés en polarisation sur deux sorties respectives ;
- un troisième amplificateur optique de forte puissance HPOA, par canal de sortie du séparateur et contrôleur de polarisation PCS ;
- un combineur de polarisations orthogonales PBC, disposé en aval du séparateur et contrôleur de polarisation PCS, configuré pour recombiner les signaux des deux canaux en entrée; et
- une deuxième tête optique OHU2 configurée pour transmettre en sortie les signaux optiques de sortie du combineur de polarisations orthogonales PBC.

Les termes amont et aval s'entendent par rapport au sens de transmission des signaux.

La présente invention comporte une succession d'éléments optiques (amplificateurs, démultiplexeurs, multiplexeurs...) qui maintiennent une continuité optique sur l'ensemble du trajet du signal de télécommunication.

Elle comporte également dans un étage plutôt central, après la section d'entrée fibrée, après canalisation (i.e. démultiplexage optique), des dispositifs de contrôle actif et séparation de polarisation par canal PCS.

Les signaux optiques sont traités en polarisation, c'est-à-dire soit séparés en leurs deux composantes orthogonales s'ils sont à double polarisation, soit entièrement projetés sur un des deux états orthogonaux, s'ils sont à simple polarisation.

L'étage de sortie est constitué des troisièmes amplificateurs optiques de forte puissance dépendants de la polarisation, qui permettent de fournir toute la puissance disponible à un seul état de polarisation.

Les différents canaux sont ensuite recombinés par un multiplexeur HPWDM1, HPWDM2 en longueur d'onde de puissance, par ensemble de canaux de sortie de même polarisation. Les canaux de polarisation orthogonale sont enfin recombinés par un combineur de polarisations orthogonales PBC. Avantageusement, le combineur de polarisations orthogonales PBC est un dispositif distinct du séparateur et contrôleur de polarisation PCS.

L'insertion de ce séparateur et contrôleur de polarisation PCS permet d'amplifier chacune des polarisations dans des HPOA dépendants de la polarisation dédiés, ce qui permet de gagner typiquement 3 dB sur la puissance de sortie après recombinaison, et donc de boucler le bilan de liaison en double bond pour un débit donné, dans de meilleures conditions, ou d'augmenter le débit total.

Alternativement, cela peut permettre d'optimiser la capacité (débit) de la liaison de transfert.

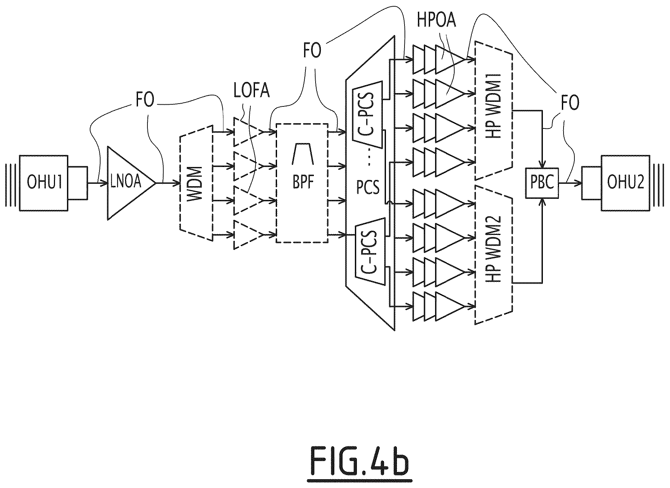

La figure 4b illustre schématiquement, selon d'autres aspects de l'invention, un répéteur optique transparent pour satellite de communication de la figure 4a, comprenant, en outre, des éléments optionnels, représentés en traits interrompus, pouvant être ajoutés seuls ou en combinaison aux éléments de la figure 4a.

Les éléments optionnels sont :
- un ensemble comprenant un démultiplexeur optique WDM, disposé entre le premier amplificateur optique à faible bruit LNOA et le séparateur et contrôleur de polarisation PCS, configuré pour séparer en longueur d'onde les signaux transmis en sortie de l'amplificateur optique à faible bruit LNOA, et délivrer en sortie les signaux séparés en longueur d'onde sur une pluralité de canaux de sortie correspondant chacun à une longueur d'onde ; et un multiplexeur optique HPWDM1, HPWDM2, disposé entre les troisièmes amplificateurs optiques de forte puissance HPOA) et le combineur de polarisations orthogonales PBC, par ensemble de canaux de sortie de même polarisation ;
- un deuxième amplificateur optique LOFA d'une longueur d'onde, par canal d'entrée du séparateur et contrôleur de polarisation PCS ;
- un filtre passe-bande optique BPF configuré pour filtrer le bruit du ou des canaux d'entrée du séparateur et contrôleur de polarisation PCS.

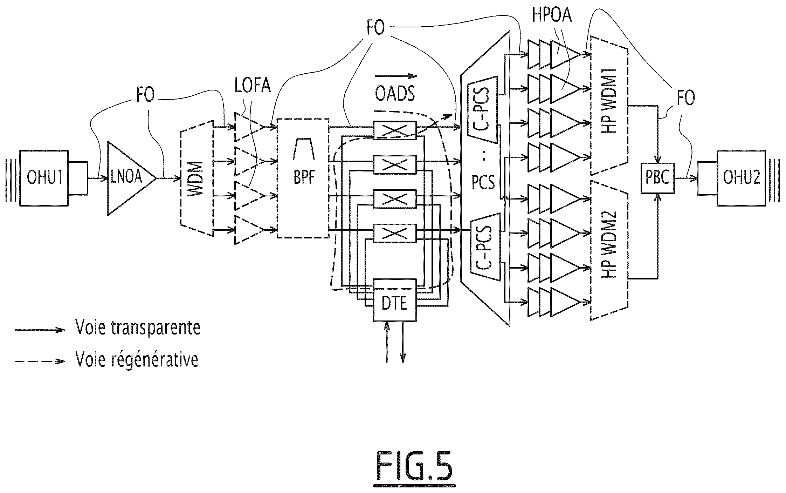

La figure 5 illustre schématiquement un mode de réalisation de la figure 4b, comprenant, en outre, pour chaque canal de sortie du filtre passe-bande BPF, un commutateur optique OADS configuré pour pouvoir sur commande transférer les signaux optiques par une autre fibre optique à destination d'un dispositif de traitement externe de satellite EPD, pour "external processing device" en langue anglaise, et les retransmettre après traitement par le dispositif de traitement externe de satellite EPD à destination du séparateur et contrôleur de polarisation PCS.

Les commutateurs optiques OADS permettent de router le signal soit directement vers le séparateur et contrôleur de polarisation PCS soit vers le dispositif de traitement externe de satellite EPD.

Par exemple, le dispositif de traitement externe de satellite EPD peut être un processeur embarqué à bord du satellite de communication OBP faisant office de répéteur régénératif.

Les commutateurs optiques OADS permettent de router les signaux optiques pour un fonctionnement transparent ou régénératif de la charge utile, ce qui permet de faire fonctionner ce répéteur optique transparent en mode régénératif.

La voie suivant la flèche continue représente le cas transparent tandis que la voie suivant la flèche en pointillée traite le cas régénératif. Dans le cas transparent, le signal passe du filtre passe-bande BPF au séparateur et contrôleur de polarisation PCS.

Dans le fonctionnement en mode régénératif, le signal montant, ou signal arrivant par la première tête optique OHU1, passe du filtre passe-bande BPF au dispositif de traitement externe de satellite EPD, dans lequel le signal optique subit un traitement.

Dans le cas d'un processeur OBP le signal optique est démodulé. Les données de ce signal, une fois démodulées, peuvent être utilisées dans la charge utile ou bien réexpédiées sous la forme d'un nouveau signal optique. Ce nouveau signal optique descendant, ou signal sortant par la deuxième tête optique OHU2 est à la même longueur d'onde mais porte soit de nouvelles données soit les mêmes données que le signal montant. Ce signal qui sort du processeur OBP va vers le séparateur et contrôleur de polarisation PCS en passant via un commutateur optique OADS.

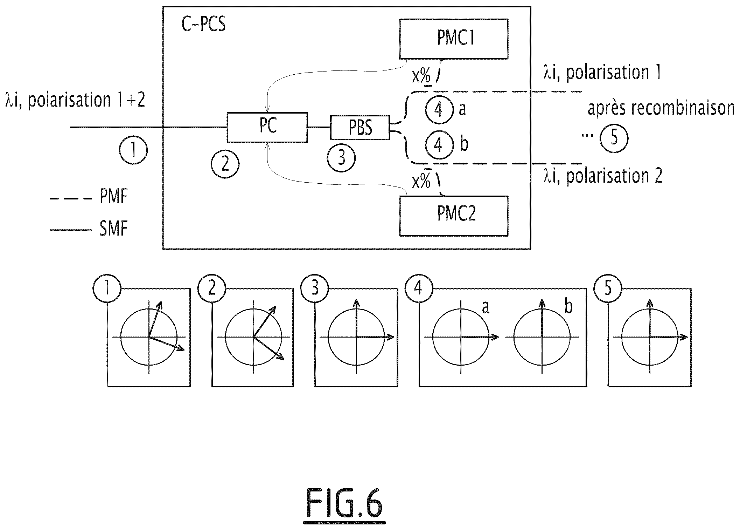

La figure 6 illustre schématiquement un mode de réalisation d'un séparateur et contrôleur de polarisation de canal C-PCS, selon un aspect de l'invention.

SMF, pour acronyme de "SingleMode Fiber" en langue anglaise, représente des fibres optiques monomodes dans lesquelles la polarisation évolue librement en fonction des contraintes sur la fibre (température, contrainte mécanique...).

PMF, pour acronyme de "Polarization Maintaining Fiber" en langue anglaise, représente des fibres optiques monomodes qui maintiennent la polarisation de la lumière selon deux axes propres orthogonaux (axe lent et axe rapide) ; si la lumière polarisée est injectée selon un de ces deux axes propres, la polarisation de la lumière est maintenue durant la propagation.

Le séparateur et contrôleur de polarisation de canal C-PCS comprend :
- un contrôleur de polarisation PC configuré pour modifier la polarisation des signaux optiques sur commande ;
- un séparateur de polarisation PBS, pour acronyme de " Polarization Beam Splitter" en langue anglaise, configuré pour séparer les signaux en fonction de deux polarisations orthogonales possibles polarisation1, polarisation2 sur deux voies respectives, en projetant les composantes sur les axes propres de la base du composant. Chaque signal de sortie contient une des deux composantes (fonction inverse d'un PBC pour acronyme de "polarization beam combiner"). ;
- un module de suivi et contrôle de polarisation PMC1, PMC2 par canal de sortie du séparateur et contrôleur de polarisation de canal C-PCS. Il s'agit d'une boucle d'asservissement de la polarisation
   - prélévement et analyse de la polarisation de la lumière,
   - calcul et génération du signal de contrôle à appliquer sur le contrôleur de polarisation PC en fonction de la valeur de polarisation souhaitée

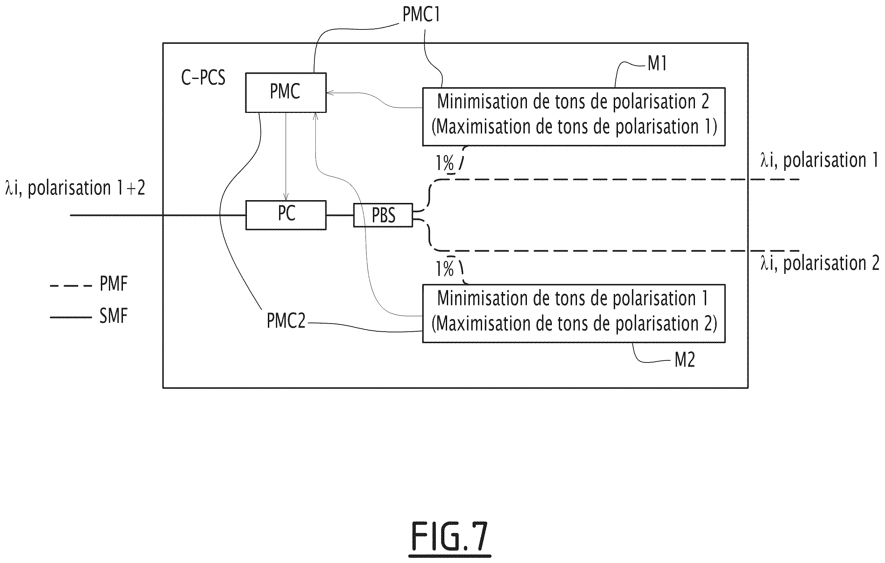

La figure 7 illustre schématiquement un mode de réalisation d'un séparateur et contrôleur de polarisation de canal C-PCS de la figure 6 configuré pour utiliser une détection de tons RF à basse fréquence. Le module de suivi et contrôle de polarisation PMC1 comprend le module de suivi et contrôle de polarisation PMC, et un module M1 de minimisation de la polarisation polarisation2 ou de maximisation de la polarisation polarisation1. Le module de suivi et contrôle de polarisation PMC2 comprend le module de suivi et contrôle de polarisation PMC, et un module M2 de minimisation de la polarisation polarisation1 ou de maximisation de la polarisation polarisation2.

En prenant l'hypothèse qu'il y a une tonalité RF ou un ton RF par polarisation (pour un signal dual-polarisation, la tonalité f_{X} est sur la polarisation polarisation1 et la tonalité f_{Y} est sur la polarisation polarisation2). En analysant les tonalités du signal du canal de sortie de la polarisation polarisation1, on peut en déduire la polarisation qui circule dans ce canal. L'analyse de la tonalité peut se faire avec une photodiode.

Si on mesure que la puissance des tonalités f_{X} et f_{Y} est égale, on peut en déduire la répartition de puissance de chaque signal dans la base d'états de polarisation {polarization1 ; polarization2}. Si par contre on mesure une puissance nulle de la tonalité f_{X} on peut en déduire qu'il ne circule dans ce canal de sortie que la polarisation polarisation2.

Si on veut avoir toute la polarisation polarisation1 dans le canal de sortie de la polarisation polarisation1 (et donc la polarisation polarisation2 dans le canal de sortie de la polarisation polarisation2 car les deux polarisations sont orthogonales), il faut asservir le contrôleur de polarisation PC afin de minimiser la tonalité f2 dans canal de polarisation polarisation1 (ou minimiser f1 dans le canal de polarisation polarisation2).

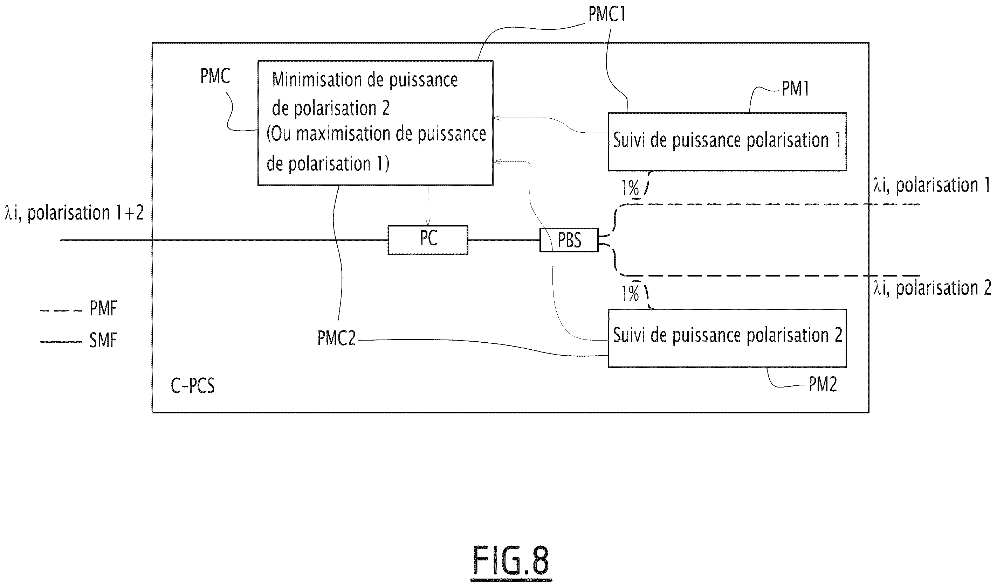

La figure 8 illustre schématiquement un mode de réalisation d'un séparateur et contrôleur de polarisation de canal C-PCS de la figure 6, comprenant un module de suivi de polarisation PMC configuré, lorsque les signaux reçus n'ont qu'une seule polarisation, pour utiliser une détection de puissance optique, de manière à maximiser la puissance sur le canal de sortie utile et à minimiser la puissance sur l'autre canal de sortie.

Le module de suivi et contrôle de polarisation PMC1 comprend le module de suivi et contrôle de polarisation PMC configuré pour minimiser la puissance du canal de polarisation de la polarisation1 (ou de maximisation du canal de polarisation de la polarisation polarisation2), et un module PM1 de suivi de puissance du canal de la polarisation polarisation1. Le module de suivi et contrôle de polarisation PMC2 comprend le module de suivi et contrôle de polarisation PMC configuré pour minimiser la puissance du canal de polarisation de la polarisation polarisation2 (ou de maximisation du canal de polarisation de la polarisation polarisation2), et un module PM2 de suivi de puissance du canal de la polarisation polarisation2.

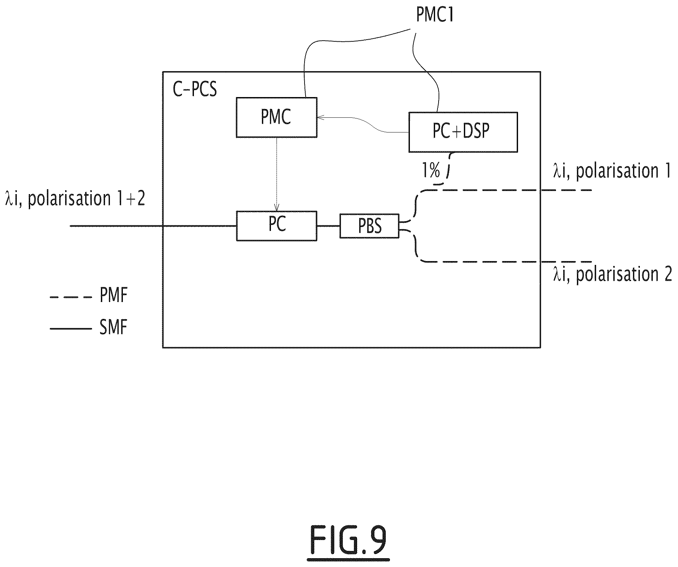

La figure 9 illustre schématiquement un mode de réalisation d'un séparateur et contrôleur de polarisation de canal C-PCS de la figure 6, comprenant un module de suivi de polarisation PMC configuré pour détecter une partie du flux optique d'un seul canal de polarisation, en l'espèce du canal de la polarisation polarisation1 en utilisant un récepteur cohérent RC, et un processeur numérique DSP configuré pour quantifier le ratio des deux polarisations polarisation1, polarisation2 et faire une rétroaction sur le contrôleur de polarisation PMC pour n'avoir qu'une seule polarisation dans le canal de polarisation comprenant le module de suivi.

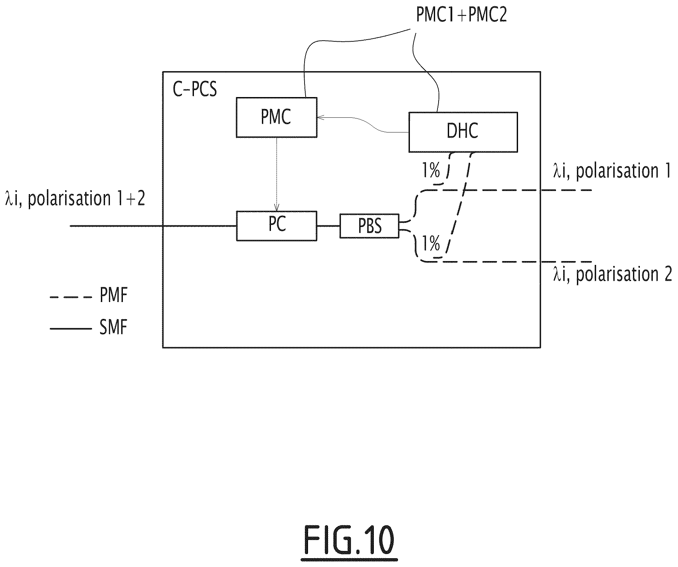

La figure 10 illustre schématiquement un mode de réalisation d'un séparateur et contrôleur de polarisation de canal C-PCS de la figure 6, comprenant un module de suivi de polarisation PMC configuré pour utiliser une détection d'interférence des signaux des deux canaux de polarisation polarisation1, polarisation2, par exemple par une détection de Hansch Couillaud DHC.

En variante de la détection de Hansch Couillaud (DHC), une détection hétérodyne peut être utilisée.

## Revendications

1. Répéteur optique transparent configuré pour être embarqué à bord d'un satellite, comprenant :
- un ensemble de fibres optiques (FO) de transfert de signaux optiques entre les éléments du répéteur optique ;
- une première tête optique (OHU1) configurée pour collecter des signaux optiques, ayant deux polarisations orthogonales possibles (polarisation1, polarisation2), avec un défaut d'orthogonalité inférieur à 10°, et les focaliser ;
- un premier amplificateur optique à faible bruit (LNOA) configuré pour amplifier les signaux optique transmis en sortie de la première tête optique (OHU1) avec un faible bruit ajouté inférieur à 6 dB ;
- un séparateur et contrôleur de polarisation (PCS), disposé en aval du premier amplificateur optique à faible bruit (LNOA), comprenant, pour chaque canal d'entrée, un séparateur et contrôleur de polarisation de canal (C-PCS) configuré pour séparer les signaux en fonction de deux polarisations orthogonales possibles, contrôler la polarisation des signaux, et délivrer en sortie les signaux séparés en polarisation sur deux sorties respectives ;
- un troisième amplificateur optique de forte puissance (HPOA), par canal de sortie du séparateur et contrôleur de polarisation (PCS) ;
- un combineur de polarisations orthogonales (PBC), disposé en aval du séparateur et contrôleur de polarisation (PCS), configuré pour recombiner les signaux des deux canaux en entrée ; et
- une deuxième tête optique (OHU2) configurée pour transmettre en sortie les signaux optiques de sortie du combineur de polarisations orthogonales (PBC).

2. Répéteur optique transparent, selon l'une la revendication 1, comprenant :
- un démultiplexeur optique (WDM), disposé entre le premier amplificateur optique à faible bruit (LNOA) et le séparateur et contrôleur de polarisation (PCS), configuré pour séparer en longueur d'onde les signaux transmis en sortie de l'amplificateur optique à faible bruit (LNOA), et délivrer en sortie les signaux séparés en longueur d'onde sur une pluralité de canaux de sortie correspondant chacun à une longueur d'onde ; et
- un multiplexeur optique (HPWDM1, HPWDM2), disposé entre les troisièmes amplificateurs optiques de forte puissance (HPOA) et le combineur de polarisations orthogonales (PBC), par ensemble de canaux de sortie de même polarisation.

3. Répéteur optique transparent, selon l'une des revendications précédentes, comprenant un deuxième amplificateur optique (LOFA) d'une longueur d'onde, par canal d'entrée du séparateur et contrôleur de polarisation (PCS).

4. Répéteur optique transparent, selon l'une des revendications précédentes, comprenant un filtre passe-bande optique (BPF) configuré pour filtrer le bruit du ou des canaux d'entrée du séparateur et contrôleur de polarisation (PCS).

5. Répéteur optique transparent, selon l'une des revendications précédentes, comprenant, pour chaque canal d'entrée du séparateur et contrôleur de polarisation (PCS), un commutateur optique (OADS) configuré pour pouvoir sur commande transférer les signaux optiques par une autre fibre optique à destination d'un dispositif de traitement externe de satellite (EPD), et les retransmettre après traitement par le dispositif de traitement externe de satellite (EPD) à destination du séparateur et contrôleur de polarisation (PCS).

6. Répéteur optique transparent, selon la revendication 5, dans lequel le dispositif de traitement externe de satellite (EPD) comprend un processeur externe (OBP).

7. Répéteur optique transparent, selon l'une des revendications précédentes, dans lequel un séparateur et contrôleur de polarisation de canal (C-PCS) comprend :
- un contrôleur de polarisation (PC) configuré pour modifier la polarisation des signaux optiques sur commande ;
- un séparateur de polarisation (PBS) configuré pour séparer les signaux en fonction des deux polarisations orthogonales possibles (polarisation1, polarisation2) sur deux canaux respectifs ; et
- un module de suivi et contrôle de polarisation (PMC1, PMC2) par canal de sortie du séparateur et contrôleur de polarisation de canal (C-PCS), par boucle d'asservissement de polarisation.

8. Répéteur optique transparent, selon la revendication 7, dans lequel un séparateur et contrôleur de polarisation de canal (C-PCS) est configuré pour utiliser une détection de tons RF à basse fréquence, un module de suivi et contrôle de polarisation (PMC1) comprenant le module de suivi et contrôle de polarisation (PMC), et un module (M1) de minimisation d'une polarisation ou de maximisation de l'autre polarisation orthogonale, l'autre module de suivi et contrôle de polarisation (PMC2) comprenant le module de suivi et contrôle de polarisation (PMC), et un module (M2) de minimisation de l'autre polarisation ou de maximisation de la polarisation.

9. Répéteur optique transparent, selon la revendication 7, dans lequel un séparateur et contrôleur de polarisation de canal (C-PCS) comprend un module de suivi de polarisation (PMC) configuré, lorsque les signaux reçus n'ont qu'une seule polarisation, pour utiliser une détection de puissance optique, de manière à maximiser la puissance sur le canal de sortie utile et à minimiser la puissance sur l'autre canal de sortie.

10. Répéteur optique transparent, selon la revendication 7, dans lequel un séparateur et contrôleur de polarisation de canal (C-PCS) comprend un module de suivi de polarisation (PMC) configuré pour détecter une partie du flux optique d'un seul canal de polarisation en utilisant un récepteur cohérent (RC), et un processeur numérique (DSP) configuré pour quantifier le ratio des deux polarisations et faire une rétroaction sur le contrôleur de polarisation (PMC) pour n'avoir qu'une seule polarisation dans le canal de polarisation comprenant le module de suivi.

11. Répéteur optique transparent, selon la revendication 7, dans lequel un séparateur et contrôleur de polarisation de canal (C-PCS) comprend un module de suivi de polarisation (PMC) est configuré pour utiliser une détection d'interférence des signaux des deux canaux de polarisation.

12. Répéteur optique transparent, selon la revendication 11, dans lequel la détection d'interférence des signaux des deux canaux de polarisation est une détection de Hansch Couillaud (DHC).

13. Répéteur optique transparent, selon la revendication 11, dans lequel la détection d'interférence des signaux des deux canaux de polarisation est une détection hétérodyne.

14. Satellite de communication comprenant un répéteur optique transparent selon l'une des revendications précédentes.
